# EUROPÄISCHE PATENTSCHRIFT

(11) **EP 0 812 642 B1**
(45) Veröffentlichungstag und Bekanntmachung des Hinweises auf die Patenterteilung: **09.01.2002**
(21) Anmeldenummer: 97109065.9
(22) Anmeldetag: 05.06.1997
(51) Int. Cl.: B23B 31/30

(54) **Arbeitsspindel**
Machining spindel
Broche d'usinage

(30) Priorität: 10.06.1996 DE 19623128
(43) Veröffentlichungstag der Anmeldung: 17.12.1997
(73) Patentinhaber: INDEX-WERKE GMBH & CO. KG HAHN & TESSKY, 73730 Esslingen (DE)
(72) Erfinder: Link, Helmut Friedrich, 73773 Aichwald 1 (DE)
(74) Vertreter: Hoeger, Stellrecht & Partner

(56) Entgegenhaltungen:
- EP-A- 0 040 697
- DE-A- 1 477 232
- DE-C- 3 734 589

## Beschreibung

Die Erfindung betrifft eine Arbeitsspindel für eine Werkzeugmaschine, umfassend ein in Spindellagern drehbar gelagertes und durch einen Motor antreibbares Spindelrohr, eine an einem Ende des Spindelrohrs angeordnete Spanneinrichtung und einen am Spindelrohr angeordneten und die Spanneinrichtung betätigenden Spannkrafterzeuger, der mindestens eine von einem ersten Zylindergehäuse und einem ersten Kolben umschlossene erste Zylinderkammer aufweist, welche zum Erzeugen einer Spannkraft in der Spanneinrichtung mit einem unter Druck stehenden Medium beaufschlagbar ist, und eine Verbindung zwischen dem Spannkrafterzeuger und der Spanneinrichtung (DE-C-3 734 589).

Derartige Arbeitsspindeln sind aus dem Stand der Technik bekannt. Das Problem bei derartigen Arbeitsspindeln besteht darin, daß je nach Spannaufgabe in der Spanneinrichtung unterschiedliche Spannkräfte erforderlich sind.

Prinzipiell besteht zwar die Möglichkeit, die Spannkräfte durch Variation des Drucks des unter Druck stehenden Mediums zur Erzeugung der Spannkraft zu variieren, dieser Druckvariation sind jedoch technische Grenzen gesetzt.

Aus diesem Grund wurde vielfach zum Erzeugen unterschiedlicher Spannkräfte der Spannkrafterzeuger als Ganzes ausgetauscht. Ein derartiger Tausch eines an einer Arbeitsspindel angeordneten Spannkrafterzeugers kommt jedoch einem Umbau der Maschine gleich, da eine Vielzahl peripherer Komponenten ab- und wieder angebaut werden muß. Dieser Umbau ist besonders aufwendig bei Werkzeugmaschinen mit mehreren Arbeitsspindeln.

Arbeitsspindeln im Sinne der vorliegenden Erfindung können sowohl Spindeln sein, in deren Spanneinrichtung Werkstücke zu spannen sind, es ist aber auch möglich, diese Spindeln als Werkzeugspindeln einzusetzen.

Insbesondere beim Einsatz von Werkstückspindeln stellt sich bei flexiblem Einsatz der Werkzeugmaschine vielfach die Aufgabe, völlig unterschiedliche Werkstücke spannen zu müssen. Das Spektrum der Werkstücke reicht von massiven Stahlteilen, bei welchen aufgrund hoher Zerspanungskräfte auch eine große Spannkraft erforderlich ist, bis zu dünnwandigen Aluminiumteilen, bei denen - um eine Verformung zu vermeiden - minimale Spannkräfte eingesetzt werden müssen.

Ausgehend von diesen bekannten Lösungen liegt der Erfindung die Aufgabe zugrunde, eine Arbeitsspindel der gattungsgemäßen Art derart zu verbessern, daß mit möglichst einfachen Mitteln eine große Bandbreite unterschiedlicher Spannkräfte erzeugbar ist.

Diese Aufgabe wird bei einer Arbeitsspindel der eingangs beschriebenen Art erfindungsgemäß dadurch gelöst, daß der Spannkrafterzeuger eine von einem zweiten Zylindergehäuse und einem zweiten Kolben umschlossene zweite Zylinderkammer aufweist, daß zum Betätigen der Spanneinrichtung stets beide Zylinderkammern von dem unter Druck stehenden Medium beaufschlagt sind und daß der Spannkrafterzeuger zur Erzeugung unterschiedlicher Spannkräfte von einem ersten Arbeitsmodus, in welchem der erste Kolben die Spanneinrichtung betätigt, in einen zweiten Arbeitsmodus, in welchem der zweite Kolben die Spanneinrichtung betätigt, umschaltbar ist.

Der Vorteil der erfindungsgemäßen Lösung ist somit darin zu sehen, daß ein zweiter Kolben in einem zweiten Zylindergehäuse mit einer zweiten Zylinderkammer vorgesehen ist, daß aber beide Zylinderkammern stets von unter demselben Druck stehenden Medium beaufschlagt sind, d. h. über denselben Druckanschluß gespeist werden können, so daß die Versorgung des erfindungsgemäßen Spannkrafterzeugers in gleicher Weise erfolgen kann, wie wenn dieser nur einen Kolben in einem ersten Zylindergehäuse aufweisen würde.

Das Umschalten zwischen dem ersten Arbeitsmodus und dem zweiten Arbeitsmodus bei der erfindungsgemäßen Lösung erfolgt lediglich dadurch, daß der erste Kolben oder der zweite Kolben im ersten bzw. zweiten Arbeitsmodus wirksam sind.

Damit ist bis auf die erforderliche Umschaltung eine Ansteuerung und ein Betrieb der erfindungsgemäßen Arbeitsspindel hinsichtlich des Zuschaltens des unter Druck stehenden Mediums so möglich, wie wenn diese nur einen einzigen Spannkrafterzeuger mit einem Kolben aufweisen würde.

Bei einem Ausführungsbeispiel der erfindungsgemäßen Lösung ist vorgesehen, entweder im ersten oder im zweiten Arbeitsmodus beide Kolben wirksam werden zu lassen, wobei, um unterschiedliche Spannkräfte zu erhalten, dann in einem anderen der Arbeitsmodi nur einer der Kolben wirksam sein kann.

Es ist im Rahmen der erfindungsgemäßen Lösung aber auch möglich, sowohl im ersten Arbeitsmodus als auch im zweiten Arbeitsmodus jeweils nur mit einem wirksamen Kolben zu arbeiten, wobei dies einen dritten Arbeitsmodus nicht ausschließt, bei welchem dann beide Kolben wirksam sind.

Eine aufgrund ihrer Einfachheit besonders vorteilhafte Lösung sieht vor, daß im ersten Arbeitsmodus nur der erste Kolben wirksam ist und im zweiten Arbeitsmodus nur der zweite Kolben.

Um dies zu erreichen, sind unterschiedliche Lösungen denkbar. Beispielsweise wäre es denkbar, die Verbindung zwischen dem ersten Kolben und der Spanneinrichtung oder die Verbindung zwischen dem zweiten Kolben und der Spanneinrichtung umschaltbar zu machen, so daß der jeweils nicht wirksame Kolben zwar durch das unter Druck stehende Medium bewegbar ist, jedoch keine Kraft auf die Spanneinrichtung ausübt.

Eine andere, aufgrund ihrer Einfachheit besonders günstige Lösung sieht vor, daß im ersten Arbeitsmodus der zweite Kolben relativ zum zweiten Gehäuse festlegbar ist.

Alternativ oder ergänzend dazu ist es aber auch möglich, vorzusehen, daß im zweiten Arbeitsmodus der erste Kolben relativ zum ersten Zylindergehäuse festlegbar ist, so daß dadurch im zweiten Arbeitsmodus sichergestellt ist, daß lediglich der zweite Kolben wirksam ist.

Bei all den Ausführungsformen, bei welchen in dem ersten Arbeitsmodus nur der erste Kolben und im dem zweiten Arbeitsmodus nur der zweite Kolben wirksam ist, ist vorgesehen, daß eine Kolbenfläche des einen Kolbens größer als eine Kolbenfläche des anderen Kolbens ist, da nur dadurch unterschiedliche Kolbenflächen zur Erzeugung unterschiedlicher Spannkräfte bei dem unter demselben Druck stehenden Medium zur Verfügung stehen.

Je nach Ausbildung der Kolben und der Zylindergehäuse und der dadurch mit dem unter Druck stehenden Medium erzeugbaren Kräfte ist es aber bei einigen Lösungen auch ausreichend, entweder im ersten Arbeitsmodus oder nur im zweiten Arbeitsmodus den zweiten bzw. den ersten Kolben relativ zum zweiten bzw. ersten Zylindergehäuse festzulegen.

Besonders einfach läßt sich die erfindungsgemäße Lösung dann realisieren und auch betreiben, wenn ein Umschalten zwischen dem ersten und dem zweiten Arbeitsmodus nur durch eine Änderung der Festlegung der Kolben erfolgt, so daß keine weiteren Maßnahmen für die Umschaltung zwischen dem ersten und dem zweiten Arbeitsmodus erforderlich sind.

Vorzugsweise ist daher zum Umschalten zwischen dem ersten und dem zweiten Arbeitsmodus ein Umschaltelement vorgesehen.

Dieses Umschaltelement könnte prinzipiell durch die Steuerung der die jeweilige Arbeitsspindel aufweisenden Werkzeugmaschine betätigbar sein.

Besonders vorteilhaft und sicher ist es jedoch, wenn das Umschaltelement manuell betätigbar ist, in diesem Fall entfällt einerseits der Steuerungsaufwand und andererseits ist es insbesondere dann, wenn die zu erzeugenden Spannkräfte von der Spanneinrichtung abhängig sind, vorteilhaft, die Möglichkeit des Umschaltens mit Änderungen auf seiten der Spanneinrichtung, die ohnehin manuell erfolgen müssen, zu verknüpfen.

Aus diesem Grund ist vorzugsweise vorgesehen, daß das Umschaltelement der Spanneinrichtung zugewandt angeordnet ist, so daß bei ohnehin erforderlicher Manipulation an der Spanneinrichtung gleichzeitig ein Umschalten erfolgen kann.

Da ohnehin die die Arbeitsspindel einsetzende Werkzeugmaschine so gebaut werden muß, daß eine einfache Manipulation im Bereich der Spanneinrichtung möglich ist, ist damit automatisch sichergestellt, daß auch das Umschalten in einfacher Weise erfolgen kann und insbesondere ist damit sichergestellt, daß die anderen Bereiche der Arbeitsspindel zum Umschalten nicht zugänglich angeordnet werden müssen.

Besonders günstig ist es bei der erfindungsgemäßen Lösung, wenn das Umschaltelement von seiten der Spanneinrichtung her zugänglich im Spindelrohr angeordnet ist, so daß beispielsweise bei Demontage der Spanneinrichtung eine freie Zugänglichkeit zum Umschaltelement möglich ist.

Im Zusammenhang mit der bisherigen Erläuterung der einzelnen Ausführungsbeispiele wurden keine näheren Angaben zur Anordnung des Umschaltelements gemacht. So wurde insbesondere nicht spezifiziert, wo das Umschaltelement konkret wirksam ist.

Insbesondere dann, wenn das Umschaltelement der Spanneinrichtung zugewandt angeordnet sein soll, ist vorteilhafterweise vorgesehen, daß das Umschaltelement im Bereich der Verbindung zwischen dem Spannkrafterzeuger und der Spanneinrichtung wirksam ist und vorzugsweise an dieser angeordnet ist.

Im Rahmen der bisherigen Erläuterung der einzelnen Ausführungsbeispiele wurde die relative Anordnung des ersten Kolbens und des zweiten Kolbens nicht näher erläutert. So wäre es prinzipiell möglich, den ersten und den zweiten Kolben völlig unabhängig voneinander anzuordnen.

Da jedoch bei den Arbeitsspindeln eine möglichst raumsparende Bauweise des Spannkrafterzeugers erwünscht ist, ist vorteilhafterweise vorgesehen, daß das erste Zylindergehäuse des ersten Kolbens durch den zweiten Kolben gebildet ist. Dies hat den großen Vorteil, daß - insbesondere da die zwei Zylinderkammern ohnehin durch unter demselben Druck stehendes Medium beaufschlagt sind - eine besonders günstige und raumsparende Lösung zur Verfügung steht.

Bei der Lösung, bei welcher der erste Kolben im zweiten Kolben angeordnet ist, bietet es sich an, die gleichwirkende Beaufschlagung der ersten Zylinderkammer und der zweiten Zylinderkammer dadurch zu realisieren, daß die erste Zylinderkammer des ersten Kolbens ständig über einen Kanal in dem zweiten Kolben mit der zweiten Zylinderkammer in Verbindung steht. Diese Lösung erlaubt es, von außen her lediglich die zweite Zylinderkammer mit dem unter Druck stehenden Medium zu beaufschlagen, da durch den Kanal mit der Beaufschlagung der zweiten Zylinderkammer auch zwangsläufig eine Beaufschlagung der ersten Zylinderkammer erfolgt.

Im Zusammenhang mit den bislang beschriebenen Lösungen wurde jeweils nur von einer ersten und einer zweiten Zylinderkammer gesprochen, da im einfachsten Fall jeweils nur eine Zylinderkammer erforderlich ist, um eine auf die Spanneinrichtung wirkende Spannkraft zum Spannen eines Werkstücks oder eines Werkzeugs zu erzeugen.

Um jedoch auch die Spanneinrichtung in vorteilhafter Weise lösen zu können oder eine Innenspannung vornehmen zu können, ist vorzugsweise vorgesehen, daß jeder Kolben noch eine rückseitige Zylinderkammer aufweist und daß die rückseitigen Zylinderkammern stets miteinander in Verbindung stehen. D. h., daß bei Beaufschlagung der rückseitigen Zylinderkammern auch in gleicher Weise wie bei Beaufschlagung der ersten und zweiten Zylinderkammern beide Kolben stets gleichzeitig beaufschlagt sind.

Insbesondere bei der vorstehend beschriebenen Lösung, bei welcher der erste Kolben im zweiten Kolben angeordnet ist, bietet es sich aus Gründen der Einfachheit an, wenn die rückseitigen Zylinderkammern beider Kolben ineinander übergehen, d. h. keinerlei Trennung derselben vorliegt.

Im Zusammenhang mit der bisherigen Erläuterung der einzelnen Ausführungsbeispiele und Realisierungsformen wurde nicht näher auf die Verbindung zwischen dem Spannkrafterzeuger und der Spanneinrichtung eingegangen. Die Verbindung kann als jede Art von Kraftübertragung ausgebildet sein. Eine besonders günstige Lösung sieht jedoch vor, daß die Verbindung zwischen dem Spannkrafterzeuger und der Spanneinrichtung eine erste Kolbenstange des ersten Kolbens und eine zweite Kolbenstange des zweiten Kolbens aufweist.

Insbesondere dann, wenn der erste Kolben im zweiten Kolben angeordnet ist, sieht eine vorteilhafte Lösung vor, daß die erste Kolbenstange koaxial zu der zweiten als Rohr ausgebildeten Kolbenstange verläuft.

Hinsichtlich der Anordnung des zweiten Zylindergehäuses wurden bislang keine näheren Angaben gemacht. So ist es besonders vorteilhaft, wenn das Spindelrohr das zweite Zylindergehäuse des zweiten Kolbens trägt. Vorzugsweise ist aus Gründen einer möglichst raumsparenden und hinsichtlich des Einbaus der Arbeitsspindel vorteilhaften Bauweise vorgesehen, daß das Spindelrohr das Zylindergehäuse des zweiten Kolbens an einem der Spanneinrichtung entgegengesetzten Ende trägt.

Um in vorteilhafter Weise die Umschaltung im Bereich der Verbindung zwischen der Spanneinrichtung und dem Spannkrafterzeuger realisieren zu können, ist bei einer besonders günstigen Lösung vorgesehen, daß im ersten Arbeitsmodus die zweite Kolbenstange mittels des Umschaltelements relativ zum Spindelrohr festlegbar ist. Da das Spindelrohr das zweite Zylindergehäuse trägt, ist damit in einfacher Weise eine Festlegung des zweiten Kolbens relativ zum zweiten Zylindergehäuse realisierbar.

Ergänzend oder alternativ hierzu ist vorgesehen, daß im zweiten Arbeitsmodus die erste Kolbenstange mittels des Umschaltelements relativ zur zweiten Kolbenstange festlegbar ist. Dabei ist ebenfalls in besonders einfacher Weise eine Festlegung des ersten Kolbens relativ zum durch den zweiten Kolben gebildeten ersten Zylindergehäuse realisierbar.

Trotz der einzelnen Ausführungen zur relativen Festlegung der Kolbenstange ist bislang nicht im Detail ausgeführt, wo das Umschaltelement selbst angeordnet ist. So sieht ein besonders bevorzugtes Ausführungsbeispiel vor, daß das Umschaltelement an der zweiten Kolbenstange angeordnet und in verschiedene relativ zur zweiten Kolbenstange fixierte Umschaltpositionen bringbar ist, so daß das Umschaltelement je nach seiner Umschaltposition unterschiedlich wirkt.

So ist im einen Fall vorzugsweise vorgesehen, daß das Umschaltelement in einer ersten Umschaltposition an einer fest gegenüber dem Spindelrohr angeordneten Schulter anliegt.

Alternativ oder ergänzend ist vorgesehen, daß das Umschaltelement in einer zweiten Umschaltposition an einer fest mit der ersten Kolbenstange verbundenen Schulter anliegt.

Das Umschaltelement selbst wurde bislang nicht näher definiert und auch die Festlegbarkeit des Umschaltelements relativ zur zweiten Kolbenstange wurde nicht näher ausgeführt.

So ist es beispielsweise denkbar, das Umschaltelement durch jede Art von kraftschlüssigen oder formschlüssigen Verbindungen an der zweiten Kolbenstange in den einzelnen Umschaltpositionen zu positionieren.

Als besonders einfach und vorteilhaft hat es sich jedoch erwiesen, wenn das Umschaltelement mittels eines Gewindes relativ zur zweiten Kolbenstange positionierbar ist, so daß durch Drehen des Umschaltelements einerseits die Umschaltposition gewechselt werden kann und andererseits bei Beendigung der Drehbewegung automatisch eine in Längsrichtung der Kolbenstange fixierte Umschaltposition des Umschaltelements vorliegt.

Um zu verhindern, daß durch Vibrationen oder ähnliche Einflüsse sich das Umschaltelement dreht und seine eingestellte Umschaltposition verläßt, ist vorzugsweise vorgesehen, daß das Umschaltelement aus zwei Teilringen ausgebildet ist, die durch Verdrehung relativ zueinander gegeneinander verspannbar sind. Es ist aber auch jede andersartige Blockierung der Drehbewegung des Umschaltelements bei einem derartigen Ausführungsbeispiel möglich.

Im übrigen wird die eingangs gestellte Aufgabe auch durch einen eine Spanneinrichtung betätigenden Spannkrafterzeuger, der mindestens eine von einem ersten Zylindergehäuse und einem ersten Kolben umschlossene erste Zylinderkammer aufweist, welche zum Erzeugen einer Spannkraft für die Spanneinrichtung mit einem unter Druck stehenden Medium beaufschlagt ist, gelöst, bei welchem erfindungsgemäß eine von einem zweiten Zylindergehäuse und einem zweiten Kolben umschlossene zweite Zylinderkammer vorgesehen ist, zum Betätigen der Spanneinrichtung beide Zylinderkammern stets von dem unter Druck stehenden Medium beaufschlagt sind und welcher zur Erzeugung unterschiedlicher Spannkräfte von einem ersten Arbeitsmodus, in welchem der erste Kolben die Spanneinrichtung betätigt, in einen zweiten Modus, in welchem der zweite Kolben die Spanneinrichtung betätigt, umschaltbar ist.

Weitere vorteilhafte Ausgestaltungen eines derartigen Spannkrafterzeugers weisen einzelne oder mehrere der vorstehend beschriebenen Merkmale auf, so daß auf die voranstehenden Ausführungen vollinhaltlich Bezug genommen wird.

Weitere Merkmale und Vorteile der erfindungsgemäßen Lösung sind Gegenstand der nachfolgenden Beschreibung sowie der zeichnerischen Darstellung eines Ausführungsbeispiels. In der Zeichnung zeigen:
- Fig. 1: einen teilweisen Längsschnitt durch ein erstes Ausführungsbeispiel einer erfindungsgemäße Arbeitsspindel im ersten Arbeitsmodus;
- Fig. 2: einen Längsschnitt der Arbeitsspindel in Fig. 1 in einem zweiten Arbeitsmodus und
- Fig. 3: einen teilweisen Längsschnitt ähnlich Fig. 1 durch ein zweites Ausführungsbeispiel einer erfindungsgemäßen Arbeitsspindel.

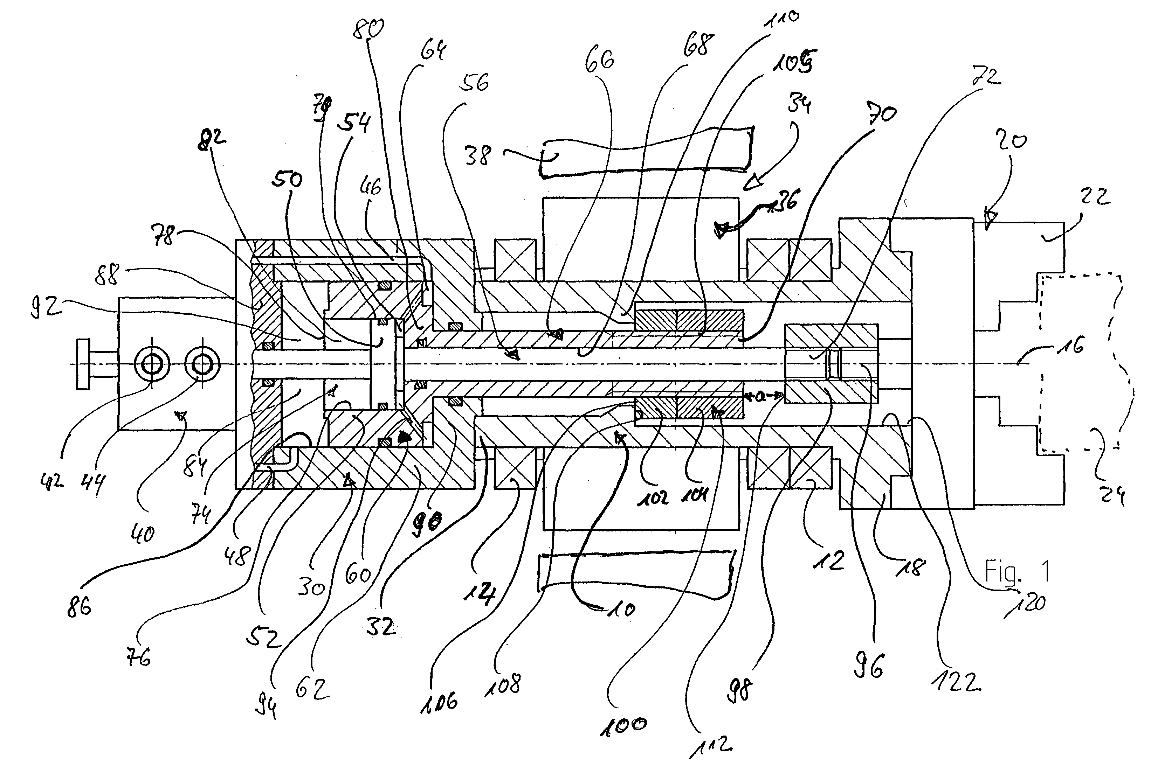

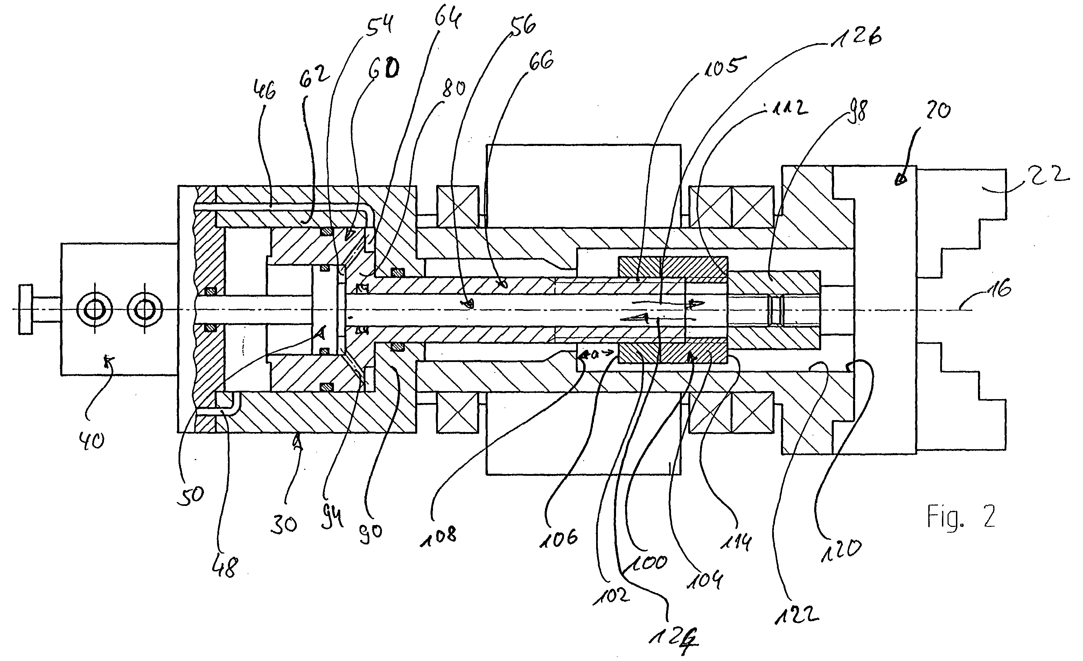

Ein erstes Ausführungsbeispiel einer erfindungsgemäßen Arbeitsspindel, dargestellt in Fig. 1 und 2, umfaßt ein als Ganzes mit 10 bezeichnetes Spindelrohr, welches in im Abstand voneinander angeordneten Spindellagern 12 und 14 um eine Spindelachse 16 drehbar gelagert ist. Das Spindelrohr 10 trägt an einem ersten Ende 18 eine als Ganzes mit 20 bezeichnete Spanneinrichtung, wobei die Spanneinrichtung 20 sowohl eine Spanneinrichtung für ein Werkstück als auch für ein Werkzeug sein kann. Im dargestellten Ausführungsbeispiel ist die Spanneinrichtung als Spanneinrichtung für ein Werkstück ausgebildet und weist Spannbacken 22 auf, die zum Spannen eines Werkstücks 24 radial in Richtung zur Spindelachse 16 aufeinanderzu bewegbar sind.

Zur Betätigung der Spanneinrichtung 20 ist ein als Ganzes mit 30 bezeichneter Spannkrafterzeuger vorgesehen, welcher vorzugsweise an einem zweiten, dem ersten Ende 18 gegenüberliegenden Ende 32 gehalten ist.

Zum Antrieb der Arbeitsspindel ist ein als Ganzes mit 34 bezeichneter Motor vorgesehen, welcher einen zwischen den Spindellagern 12 und 14 drehfest auf dem Spindelrohr 10 sitzenden Rotor 36 sowie einen stationär angeordneten Stator 38 umfaßt. Es ist aber genauso möglich, das Spindelrohr 10 über einen neben dem Spindelrohr sitzenden Motor mittels eines Riemens anzutreiben.

Da der Spannkrafterzeuger 30 fest am Spindelrohr 10 gehalten ist und somit mit diesem mitrotiert, ist zur Zufuhr eines Betätigungsmediums, insbesondere Hydraulikmediums, auf einer dem zweiten Ende 32 des Spindelrohrs 10 abgewandten Seite des Spannkrafterzeugers 30 eine mitrotierende Mediumzuführung 40 vorgesehen, welche eine Verbindung zwischen zwei stationären Anschlüssen 42 und 44 sowie zwei mitrotierenden Mediumleitungen 46 und 48 darstellt.

Der Spannkrafterzeuger 30 umfaßt einen ersten Kolben 50, welcher in einem ersten Zylindergehäuse 52 angeordnet ist, wobei das erste Zylindergehäuse 52 und der erste Kolben 50 eine Zylinderkammer 54 zwischen sich einschließen. Ferner erstreckt sich von dem ersten Kolben 50 eine erste Kolbenstange 56 koaxial zum Spindelrohr 10 in Richtung der Spanneinrichtung 20.

Das erste Zylindergehäuse 52 wird bei der erfindungsgemäßen Lösung durch einen als Ganzes mit 60 bezeichneten zweiten Kolben gebildet, welcher seinerseits in einem zweiten Zylindergehäuse 62 angeordnet ist, wobei zwischen dem zweiten Zylindergehäuse 62 und dem zweiten Kolben 60 eine zweite Zylinderkammer 64 eingeschlossen ist.

Mit dem zweiten Kolben 60 ist eine zweite Kolbenstange 66 verbunden, wobei diese vorzugsweise einstückig an den zweiten Kolben 60 angeformt ist. Die zweite Kolbenstange 66 ist in Form eines Rohrs ausgebildet und weist einen inneren Kanal 68 auf, in welchem die erste Kolbenstange 56 verläuft, wobei sich der innere Kanal 68 einerseits bis zur ersten Zylinderkammer 54 und somit durch den zweiten Kolben 60 hindurcherstreckt und andererseits bis zu einem vorderen Ende 70 der zweiten Kolbenstange 66 verläuft, so daß aus diesem dann die erste Kolbenstange 56 mit einem der Spanneinrichtung 20 zugewandten Ende 72 übersteht.

Um die erste Zylinderkammer 54 dicht abzuschließen, verläuft die erste Kolbenstange 56 in dem inneren Kanal 68 in ihrer Längsrichtung abgedichtet.

Zur Führung des Kolbens 50 weist das erste Zylindergehäuse 52 eine Ausnehmung 74 auf, welche parallel zur Spindelachse 16 verlaufende zylindrische Wandflächen 76 umfaßt, in welchen der erste Kolben 50 mit seinen Kolbenmantelflächen 79 parallel zur Spindelachse 16 verschieblich geführt ist. Die Ausnehmung 74 erstreckt sich von einer Öffnung 78 des zweiten Kolbens 60 bis zu einem Kolbenboden 80 desselben und ist durch den ersten Kolben 50 in die erste Zylinderkammer 54 sowie eine über die Öffnung 78 zugängliche rückseitige erste Zylinderkammer 82 unterteilt.

Auch der in dem zweiten Zylindergehäuse 62 angeordnete zweite Kolben 60 ist in einer Ausnehmung 84 mit zur Spindelachse 16 parallelen Wandflächen 86 in Richtung der Spindelachse 16 verschieblich geführt, und zwar zwischen einem Zylindergehäusedeckel 88 und einem Zylindergehäuseboden 90, wobei der zweite Kolben 60 die zweite Zylinderkammer 64 von einer rückseitigen zweiten Zylinderkammer 92 trennt. In die rückseitige zweite Zylinderkammer 92 geht dabei die rückseitige erste Zylinderkammer über die Öffnung 78 über.

Von der auf dem Zylindergehäusedeckel 88 angeordneten rotierenden Mediumzuführung 40 führen die Mediumleitungen 46 und 48 durch die Wand des zweiten Zylindergehäuses 62 hindurch, wobei die Mediumleitung 46 in die zweite Zylinderkammer 64 und die Mediumleitung 48 in die rückseitige zweite Zylinderkammer 92 einmündet. Über die Öffnung 78 ist auch die rückseitige erste Zylinderkammer 82 unmittelbar mit der rückseitigen zweiten Zylinderkammer 92 verbunden, so daß über die Mediumleitungen 48 eine Zufuhr oder Abfuhr von Hydraulikmedium aus beiden rückseitigen Zylinderkammern 82 und 92 möglich ist.

Auch die ersten Zylinderkammern 54 und 64 sind miteinander verbunden, und zwar durch den Kolbenboden 80 des zweiten Kolbens durchsetzende Kanäle 94, welche sowohl in die erste Zylinderkammer 54 als auch in die zweite Zylinderkammer 64 einmündende Öffnungen aufweisen.

Bei Zufuhr von Medium unter einem bestimmten Druck über die Mediumleitung 46 sind somit sowohl die erste Zylinderkammer 54 als auch die zweite Zylinderkammer 64 mit Medium unter dem vorgesehenen Druck gleichzeitig beaufschlagbar.

Je nach Größe der senkrecht zur Spindelachse 16 verlaufenden Kolbenflächen des ersten Kolbens 50 oder der senkrecht zur Spindelachse 16 verlaufenden Kolbenflächen des zweiten Kolbens 60 ist nun bei der erfindungsgemäßen Lösung eine unterschiedliche Spannkraft in der Spanneinrichtung 20 erzeugbar.

Hierzu ist die erste Kolbenstange 56 im Bereich des über die zweite Kolbenstange 66 überstehenden Endes 72 mittels eines Verbindungselements 98 mit einer Betätigungsstange 96 der Spanneinrichtung verbunden. Vorzugsweise sind die Betätigungsstange 96 und das Ende 72 mit einem Gewinde versehen, und beide sind durch eine auf die Gewinde aufschraubbare Muffe 98 miteinander verbunden.

Ferner ist ein als Ganzes mit 100 bezeichnetes Umschaltelement vorgesehen, welches beispielsweise als Gewindering, vorzugsweise als geteilter Gewindering mit den Teilringen 102 und 104, ausgebildet ist, die gegeneinander verspannbar sind. Das als Gewindering ausgebildete Umschaltelement 100 ist dabei auf ein Außengewinde 105 der zweiten Kolbenstange 66 aufgeschraubt, welches sich ausgehend von dem vorderen Ende 70 der zweiten Kolbenstange 66 in Richtung des zweiten Kolbens 60 erstreckt.

Das Umschaltelement 100 ist durch Verdrehen in verschiedenen, relativ zur zweiten Kolbenstange 66 jedoch fixierten Positionen bringbar. Wie beispielsweise in Fig. 1 dargestellt, ist das als Gewindering ausgebildete Umschaltelement 100 in der in Fig. 1 dargestellten ersten Umschaltposition so angeordnet, daß das Umschaltelement 100 mit seiner dem Spannkrafterzeuger 30 zugewandten Stirnseite 106 an einer Ringschulter 108 eines an das Spindelrohr 10 angeformten Stützrings 110 anliegt, wobei in dieser in Fig. 1 dargestellten ersten Umschaltposition des Umschaltelements 100 der zweite Kolben 60 mit seinem Kolbenboden 80 an dem Zylindergehäuseboden 90 anliegt.

In dieser ersten Umschaltposition arbeitet der Spannkrafterzeuger 30 in einem ersten Arbeitsmodus, wobei in dem ersten Arbeitsmodus durch das Anliegen der Stirnseite 106 an der Ringschulter 108 der zweite Kolben 60 unbeweglich in dem zweiten Zylindergehäuse 62 angeordnet ist und lediglich der erste Kolben 50 bewegbar ist. Bei Beaufschlagung der zweiten Zylinderkammer 64 über die Mediumleitung 46 erfolgt daher keine Bewegung des zweiten Kolbens 60, sondern das Medium strömt über die Kanäle 94 durch den Kolbenboden 80 des zweiten Kolbens 60 hindurch in die erste Zylinderkammer 54. Damit werden die senkrecht zur Spindelachse 16 verlaufenden Kolbenflächen des ersten Kolbens 50 mit dem unter dem definierten Druck stehenden Medium beaufschlagt und erzeugen eine der Größe der Kolbenflächen des ersten Kolbens 50 proportionale Kraft in einer Spannrichtung 124, welche die erste Kolbenstange 56 über die mit dem Ende 72 sowie der Betätigungsstange 96 verbundene Muffe 98 auf die Spanneinrichtung 20 überträgt. Die Muffe 98 ist dabei so weit in Richtung des vorderen Endes 70 der zweiten Kolbenstange 66 bewegbar, bis eine Stirnfläche 112 der Muffe 98 an dem vorderen Ende 70 der zweiten Kolbenstange 66 zur Anlage kommt. Dieser mögliche Weg ist in Fig. 1 mit a bezeichnet.

In einer in Fig. 2 dargestellten zweiten Umschaltposition steht das als Gewindering ausgebildete Umschaltelement 100 über das vordere Ende 70 der zweiten Kolbenstange 66 über, und zwar so weit, bis eine Stirnseite 114 desselben an der Stirnfläche 112 der Muffe 98 anliegt.

In dieser zweiten Umschaltposition des Umschaltelements 100 ist der erste Kolben 50 so weit in Richtung des Kolbenbodens 80 des zweiten Kolbens 60 bewegt, daß er an diesem anliegt.

In der zweiten Umschaltposition des Umschaltelements 100 ist dieses so weit durch Verdrehen auf dem Außengewinde 105 der zweiten Kolbenstange in Richtung der Spanneinrichtung 20 bewegt, daß zwischen der Stirnseite 106 des Umschaltelements sowie der Ringschulter 108 bei nicht betätigtem Spannkrafterzeuger 30 ein Zwischenraum a in Richtung der Spindelachse 16 gesehen verbleibt.

Wird in der zweiten Umschaltposition des Umschaltelements 100 über die Mediumleitung 46 die zweite Zylinderkammer 64 mit dem unter Druck stehenden Medium beaufschlagt, so bewegt sich der zweiten Kolben 60 von dem Zylindergehäuseboden 90 weg unter Mitnahme des ersten Kolbens 50, wobei der erste Kolben 50 und der zweite Kolben 60 durch das Umschaltelement 100 in Richtung der Spindelachse 16 unverschieblich miteinander verbunden sind. Diese unverschiebliche Verbindung des ersten Kolbens 50 und des zweiten Kolbens 60 hat außerdem zur Folge, daß die Druckbeaufschlagung der ersten Zylinderkammer 54 über die Kanäle 94 wirkungslos bleibt, so daß die bei in der zweiten Umschaltstellung des Umschaltelements 100 und somit im zweiten Arbeitsmodus des Spannkrafterzeugers 30 erzeugte Kraft in Spannrichtung 124 der Größe der sich senkrecht zur Spindelachse 16 erstreckenden Kolbenflächen des ersten Kolbens 60 proportional ist. Diese Kraft wird über die erste Kolbenstange 56 und die Muffe 98 ebenfalls auf die Betätigungsstange 96 der Spanneinrichtung 20 übertragen.

Wird zum Betätigen der Spanneinrichtung 20 jeweils das Medium über die Mediumleitung 46 unabhängig vom Arbeitsmodus mit dem gleichen Druck zugeführt, so sind je nach Arbeitsmodus aufgrund der unterschiedlichen Kolbenflächen des ersten Kolbens 50 und des zweiten Kolbens 60 unterschiedliche Kräfte auf die Betätigungsstange 96 wirksam, und somit erfolgt ein Spannen beispielsweise des Werkstücks 24 ebenfalls mit unterschiedlichen Kräften, obwohl beispielsweise lediglich über den Anschluß 42 und somit die Mediumleitung 46 unter Druck stehendes Medium zugeführt und über den Anschluß 44 und die Mediumleitung 48 aus den rückseitigen Zylinderkammern 82 und 92 Medium abgeführt wird.

Wie in Fig. 1 und 2 dargestellt, sind erfindungsgemäß die beiden Kolbenstangen 56 und 66 so ausgebildet, daß deren vordere Enden 72 und 70 nahe des ersten Endes 18 des Spindelrohrs 10 liegen, welches die Spanneinrichtung 20 trägt, so daß bei abgenommener Spanneinrichtung 20 über eine stirnseitige Öffnung 120 das Umschaltelement 100 zugänglich und durch Drehen von der ersten Umschaltposition in die zweite Umschaltposition bringbar ist, wobei in jeder der Umschaltpositionen ein Verspannen der Teilringe 102 und 104 durch Verdrehen relativ zueinander erfolgt, um das Umschaltelement 100 in der jeweiligen Umschaltposition kraftschlüssig zu fixieren.

Die bisher beschriebene Funktionsweise des Spannkrafterzeugers 30 betrifft vorzugsweise Fälle, in denen, wie in Fig. 1 dargestellt, ein außenseitiges Spannen des Werkstücks 24 durch Zug in einer Spannrichtung 24 erfolgt.

Ist jedoch eine Innenspannung erforderlich, so ist die Spanneinrichtung 20 mit umgekehrter Spannrichtung 126 zu betätigen.

Hierzu werden dann über die Mediumleitung 48 die rückseitigen ersten und zweiten Zylinderkammern 82 und 92 beaufschlagt, wobei in dem ersten Arbeitsmodus der zweite Kolben 60 in der beschriebenen Weise durch das Umschaltelement 100 relativ zum Spindelrohr festlegbar ist, während der erste Kolben 50 arbeitet, und in dem zweiten Arbeitsmodus der erste Kolben 50 relativ zum zweiten Kolben 60 festgelegt, so daß im Endeffekt nur der zweite Kolben 60 arbeitet.

Insbesondere in dem zweiten Arbeitsmodus ist es erforderlich, daß das Umschaltelement 100 mit seiner Stützfläche 114 an der Stützfläche 112 der Muffe 98 anliegt, damit der zweite Kolben 60 in der Lage ist, über die zweite Kolbenstange 66 auf die Spanneinrichtung 20 in der Spannrichtung 126 zu wirken.

Vorzugsweise ist zur Verbesserung der Zugänglichkeit zum Umschaltelement das Spindelrohr ausgehend von der stirnseitigen Öffnung 120 mit einer radial erweiterten und sich in Richtung des Spannkrafterzeugers 30 erstreckenden Ausnehmung 122 versehen, welche sich so weit in das Spindelrohr 10 hineinerstreckt, daß das Umschaltelement 100 in beiden Umschaltpositionen gut zugänglich ist, so daß die beiden Teilringe 102 und 104 in einfacher Weise gegeneinander verspannbar sowie die Verspannung lösbar und das gesamte Umschaltelement 100 zwischen den beiden Umschaltpositionen hin- und herbewegbar ist.

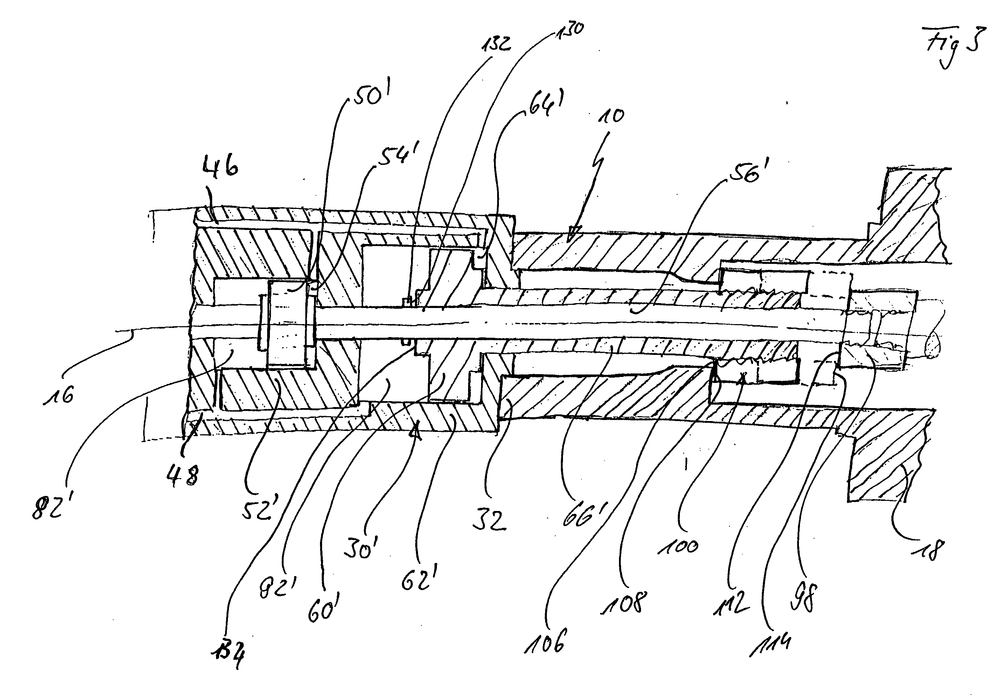

Bei einem zweiten Ausführungsbeispiel, dargestellt in Fig. 3, ist der Spannkrafterzeuger 30' so ausgebildet, daß in einem Gehäuseblock sowohl das erste Zylindergehäuse 52' als auch das zweite Zylindergehäuse 62' angeordnet sind, und zwar aufeinanderfolgend.

Dem Ende 32 des Spindelrohrs 10 zugewandt liegt das Zylindergehäuse 62' in welchem der Kolben 60' angeordnet ist, dessen zweite Kolbenstange 66' sich in Richtung der Spanneinrichtung 20 erstreckt.

Auf der dem Ende 32 abgewandten Seite des zweiten Zylindergehäuses 62' ist das erste Zylindergehäuse 52' in dem Gehäuseblock des Spannkrafterzeugers 30' angeordnet und in diesem der erste Kolben 50', wobei sich die mit diesem verbundene erste Kolbenstange 56' durch das zweite Zylindergehäuse 62' und auch durch den zweiten Kolben 60' und die zweite Kolbenstange 66' hindurch in Richtung der Spanneinrichtung 20 erstreckt, in gleicher Weise wie im Zusammenhang mit dem ersten Ausführungsbeispiel beschrieben.

In gleicher Weise wie beim ersten Ausführungsbeispiels sind beide Zylinderkammern 54' und 64' direkt mit der Mediumleitung 46 und die rückseitigen Zylinderkammern 82' und 92' mit der Mediumleitung 48 ständig verbunden.

Ferner ist die den zweiten Kolben 60' durchsetzende erste Kolbenstange 56' mit einem eine Anschlagschulter 130 aufweisenden Anschlagring 132 versehen, gegen welche der zweite Kolben 60' mit einer der zweiten Kolbenstange 66 abgewandten Anschlagfläche 134 zur Anlage kommt, wenn der zweite Kolben nicht durch das Umschaltelement 100 am Spindelrohr 10 festgelegt ist.

Das zweite Ausführungsbeispiel unterscheidet sich hinsichtlich seiner Funktionsweise vom ersten Ausführungsbeispiel insoweit, als bei Beaufschlagung der Mediumleitung 46 mit unter Druck stehendem Hydraulikmedium beide Kolben 50' und 60' zusammenwirken, da der zweite Kolben 60' mit der Anschlagfläche 134 an der Anschlagschulter 130 zur Anlage kommt und somit ebenfalls über die erste Kolbenstange 56' auf die Spanneinrichtung 20 wirkt.

Als wirksame Fläche dient die Fläche des ersten Kolbens 50', welche der ersten Zylinderkammer 54' zugewandt ist, zuzüglich der Kolbenfläche des zweiten Kolbens 60', welche der zweiten Zylinderkammer 64' zugewandt ist, wenn beide Zylinderkammern 54' und 64' über die Mediumleitung 46 mit unter Druck stehendem Medium beaufschlagt werden.

Im Gegensatz zum ersten Ausführungsbeispiel ist in diesem Fall in dem zweiten Arbeitsmodus die Summe der Fläche beider Kolben 50' und 60' wirksam, wobei in diesem Fall das Umschaltelement 100 in der in Fig. 3 gestrichelten Stellung steht.

Steht das Umschaltelement 100 in der in Fig. 3 dargestellten Stellung, so entspricht die Funktionsweise dem ersten Arbeitsmodus des ersten Ausführungsbeispiels, da der zweite Kolben 60' über das Umschaltelement relativ zum Spindelrohr festgelegt ist, so daß nur der erste Kolben 50' über die erste Kolbenstange 56' auf die Spanneinrichtung 20 wirkt und somit auch nur dessen der ersten Zylinderkammer 54' zugewandte Kolbenfläche wirksam sein kann.

In gleicher Weise wie beim ersten Ausführungsbeispiel läßt sich aber auch die Wirkung auf die Spanneinrichtung 20, beispielsweise zur Innenspannung von Teilen umkehren, nämlich dadurch, daß über die Mediumleitung 48 die rückseitigen Zylinderkammern 82' und 92' gleichzeitig beaufschlagt werden.

In diesem Fall ist im einen ersten Arbeitsmodus, in welchem der zweite Kolben 60' durch das Umschaltelement 100 festgelegt ist, ebenfalls nur der erste Kolben 50' wirksam, während im anderen zweiten Arbeitsmodus die den rückseitigen Zylinderkammern 82' und 92' zugewandten Kolbenflächen der Kolben 50' und 60' zusammen wirksam sind, wobei in diesem Fall die erste Kolbenstange 56' direkt auf die Spanneinrichtung wirkt, während die zweite Kolbenstange 66' über das in der gestrichelten Stellung stehende Umschaltelement 100, insbesondere dessen Stirnseite 114, auf die Stirnseite 112 der Muffe 98 wirkt.

## Patentansprüche

1. Arbeitsspindel für eine Werkzeugmaschine, umfassend ein in Spindellagern drehbar gelagertes und durch einen Motor antreibbares Spindelrohr (10), eine an einem Ende des Spindelrohrs angeordnete Spanneinrichtung (20), einen am Spindelrohr angeordneten und die Spanneinrichtung betätigenden Spannkrafterzeuger (30), der mindestens eine von einem ersten Zylindergehäuse (52) und einem ersten Kolben (50) umschlossene erste Zylinderkammer (54) aufweist, welche zum Erzeugen einer Spannkraft in der Spanneinrichtung mit einem unter Druck stehenden Medium beaufschlagbar ist, und eine Verbindung zwischen dem Spannkrafterzeuger (30) und der Spanneinrichtung (20),
**dadurch gekennzeichnet,**
**daß** der Spannkrafterzeuger (30, 30') eine von einem zweiten Zylindergehäuse (62, 62') und einem zweiten Kolben (60, 60') umschlossene zweite Zylinderkammer (64) aufweist, daß zum Betätigen der Spanneinrichtung (20) stets beide Zylinderkammern (54, 64; 54', 64') von dem unter Druck stehenden Medium beaufschlagt sind und daß der Spannkrafterzeuger (30, 30') zur Erzeugung unterschiedlicher Spannkräfte von einem ersten Arbeitsmodus, in welchem der erste Kolben (50, 50') die Spanneinrichtung (20) betätigt, in einen zweiten Arbeitsmodus, in welchem der zweite Kolben (60, 60') die Spanneinrichtung (20) betätigt, umschaltbar ist.

2. Arbeitsspindel nach Anspruch 1, **dadurch gekennzeichnet, daß** in dem ersten Arbeitsmodus einer der Kolben (50') und in dem zweiten Arbeitsmodus beide Kolben (50', 60') wirksam sind.

3. Arbeitsspindel nach Anspruch 1, **dadurch gekennzeichnet, daß** in dem ersten Arbeitsmodus nur der erste Kolben (50) und in dem zweiten Arbeitsmodus nur der zweite Kolben (60) wirksam ist.

4. Arbeitsspindel nach Anspruch 2 oder 3, **dadurch gekennzeichnet, daß** in dem ersten Arbeitsmodus der zweite Kolben (60, 60') relativ zum zweiten Zylindergehäuse (62, 62') festlegbar ist.

5. Arbeitsspindel nach Anspruch 3 oder 4, **dadurch gekennzeichnet, daß** im zweiten Arbeitsmodus der erste Kolben (50) relativ zum ersten Zylindergehäuse (52) festlegbar ist.

6. Arbeitsspindel nach einem der voranstehenden Ansprüche, **dadurch gekennzeichnet, daß** eine Kolbenfläche eines Kolbens (60, 60') größer als eine Kolbenfläche des anderen Kolbens (50, 50') ist.

7. Arbeitsspindel nach einem der Ansprüche 2 bis 6, **dadurch gekennzeichnet, daß** ein Umschalten zwischen dem ersten und dem zweiten Arbeitsmodus durch eine Änderung der Festlegung der Kolben (50, 60; 50', 60') erfolgt.

8. Arbeitsspindel nach Anspruch 7, **dadurch gekennzeichnet, daß** zum Umschalten zwischen dem ersten und dem zweiten Arbeitsmodus ein Umschaltelement (100) vorgesehen ist.

9. Arbeitsspindel nach Anspruch 8, **dadurch gekennzeichnet, daß** das Umschaltelement (100) manuell betätigbar ist.

10. Arbeitsspindel nach Anspruch 8 oder 9, **dadurch gekennzeichnet, daß** das Umschaltelement (100) der Spanneinrichtung (20) zugewandt angeordnet ist.

11. Arbeitsspindel nach Anspruch 10, **dadurch gekennzeichnet, daß** das Umschaltelement (100) von seiten der Spanneinrichtung (20) her zugänglich im Spindelrohr (10) angeordnet ist.

12. Arbeitsspindel nach einem der Ansprüche 7 bis 11, **dadurch gekennzeichnet, daß** das Umschaltelement (100) an der Verbindung (56, 66) zwischen dem Spannkrafterzeuger (30) und der Spanneinrichtung (20) wirksam ist.

13. Arbeitsspindel nach einem der voranstehenden Ansprüche, **dadurch gekennzeichnet, daß** das erste Zylindergehäuse (52) des ersten Kolbens (50) durch den zweiten Kolben (60) gebildet ist.

14. Arbeitsspindel nach Anspruch 13, **dadurch gekennzeichnet, daß** die erste Zylinderkammer (54) des ersten Kolbens (50) über einen Kanal (94) in dem zweiten Kolben (60) mit der zweiten Zylinderkammer (64) in Verbindung steht.

15. Arbeitsspindel nach einem der voranstehenden Ansprüche, **dadurch gekennzeichnet, daß** jeder Kolben (50, 60; 50', 60') eine rückseitige Zylinderkammer (82, 92; 82', 92') aufweist und daß die rückseitigen Zylinderkammern (82, 92; 82', 92') stets miteinander in Verbindung stehen.

16. Arbeitsspindel nach Anspruch 15, **dadurch gekennzeichnet, daß** die rückseitigen Zylinderkammern (82, 92) ineinander übergehen.

17. Arbeitsspindel nach einem der voranstehenden Ansprüche, **dadurch gekennzeichnet, daß** die Verbindung zwischen dem Spannkrafterzeuger (30; 30') und der Spanneinrichtung (20) eine erste Kolbenstange (56: 56') des ersten Kolbens (50; 50') und eine zweite Kolbenstange (66; 66') des zweiten Kolbens (60; 60') aufweist.

18. Arbeitsspindel nach Anspruch 17, **dadurch gekennzeichnet, daß** die erste Kolbenstange (56; 56') koaxial zu der als Rohr ausgebildeten zweiten Kolbenstange (66; 66') verläuft.

19. Arbeitsspindel nach einem der Ansprüche 13 bis 18, **dadurch gekennzeichnet, daß** das Spindelrohr (10) das zweite Zylindergehäuse (62; 62') des zweiten Kolbens (60; 60') trägt.

20. Arbeitsspindel nach Anspruch 19, **dadurch gekennzeichnet, daß** das Spindelrohr (10) das zweite Zylindergehäuse (62; 62') des zweiten Kolbens (60; 60') an einem der Spanneinrichtung (20) entgegengesetzten Ende (32) trägt.

21. Arbeitsspindel nach einem der Ansprüche 17 bis 20, **dadurch gekennzeichnet, daß** im ersten Arbeitsmodus die zweite Kolbenstange (66; 66') mittels des Umschaltelements (100) relativ zum Spindelrohr (10) festlegbar ist.

22. Arbeitsspindel nach einem der Ansprüche 17 bis 21, **dadurch gekennzeichnet, daß** im zweiten Arbeitsmodus die erste Kolbenstange (56; 56') mittels des Umschaltelements (100) relativ zur zweiten Kolbenstange (66; 66') festlegbar ist.

23. Arbeitsspindel nach einem der Ansprüche 21 oder 22, **dadurch gekennzeichnet, daß** das Umschaltelement (100) an der zweiten Kolbenstange (66; 66') angeordnet und in verschiedene, relativ zur zweiten Kolbenstange (66) fixierte Umschaltpositionen bringbar ist.

24. Arbeitsspindel nach Anspruch 23, **dadurch gekennzeichnet, daß** das Umschaltelement (100) in einer ersten Umschaltposition an einer fest gegenüber dem Spindelrohr (10) angeordneten Schulter (108) anliegt.

25. Arbeitsspindel nach Anspruch 23 oder 24, **dadurch gekennzeichnet, daß** das Umschaltelement (100) in einer zweiten Umschaltposition an einer fest mit der ersten Kolbenstange (56; 56') verbundenen Schulter (112) anliegt.

## Claims

1. Work spindle for a machine tool comprising a spindle guard tube (10) rotatably mounted in spindle bearings, the spindle guard tube being drivable by a motor, a clamping arrangement (20) disposed at an end of the spindle guard tube, a clamping force generator (30), which is arranged on the spindle guard tube and operates the clamping arrangement, and which has at least one first cylinder chamber (54) enclosed by a first cylinder housing (52) and a first piston (50), which in order to generate a clamping force in the clamping arrangement, is subjected to a pressurised medium, and a connection between the clamping force generator (30) and the clamping arrangement (20), **characterised in that** the clamping force generator (30, 30') has a second cylinder chamber (64) enclosed by a second cylinder housing (62, 62') and a second piston (60, 60'); that for operation of the clamping arrangement (20), always both cylinder chambers (54, 64; 54', 64') are subjected to a pressurised medium; and that in order to generate different clamping forces, the clamping force generator (30, 30') is switchable over from a first working mode, in which the first piston (50, 50') operates the clamping arrangement (20), into a second working mode, in which the second piston (60, 60') operates the clamping arrangement (20).

2. Work spindle according to Claim 1, **characterised in that** one of the pistons (50') is active in the first working mode, and both pistons (50', 60) are active in the second working mode.

3. Work spindle according to Claim 1, **characterised in that** only the first piston (50) is active in the first working mode, and only the second piston (60) is active in the second working mode.

4. Work spindle according to Claim 2 or 3, **characterised in that** in the first working mode, the second piston (60, 60') is fixable relative to the second cylinder housing (62, 62').

5. Work spindle according to Claim 3 or 4, **characterised in that** in the second working mode, the first piston (50) is fixable relative to the first cylinder housing (52).

6. Work spindle according to one of the preceding claims, **characterised in that** a piston area of one piston (60, 60') is larger than a piston area of the other piston (50, 50').

7. Work spindle according to one of Claims 2 to 6, **characterised in that** a switchover occurs between the first and the second working mode by changing the fixture of the pistons (50, 60; 50', 50').

8. Work spindle according to Claim 7, **characterised in that** a switchover element (100) is provided for the switchover between the first and second working mode.

9. Work spindle according to Claim 8, **characterised in that** the switchover element (100) is manually operable.

10. Work spindle according to Claim 8 or 9, **characterised in that** the switchover element (100) is arranged to face the clamping arrangement (20).

11. Work spindle according to Claim 10, **characterised in that** the switchover element (100) is arranged in the spindle guard tube (10) so as to be accessible with respect to the clamping arrangement (20).

12. Work spindle according to one of Claims 7 to 11, **characterised in that** the switchover element (100) is active at the connection (56, 66) between the clamping force generator (30) and the clamping arrangement (20).

13. Work spindle according to one of the preceding claims, **characterised in that** the first cylinder housing (52) of the first piston (50) is formed by the second piston (60).

14. Work spindle according to Claim 13, **characterised in that** the first cylinder chamber (54) of the first piston (50) is connected to the second cylinder chamber (64) via a conduit (94) in the second piston (60).

15. Work spindle according to one of the preceding claims, **characterised in that** each piston (50, 60; 50', 60') has a rear-side cylinder chamber (82, 92; 82', 92'); and that the rear-side cylinder chambers (82, 92; 82', 92') are always connected to one another.

16. Work spindle according to Claim 15, **characterised in that** the rear-side cylinder chambers (82, 92) merge into one another.

17. Work spindle according to one of the preceding claims, **characterised in that** the connection between the clamping force generator (30, 30') and the clamping arrangement (20) comprises a first piston rod (56; 56') of the first piston (50; 50') and a second piston rod (66; 66') of the second piston (60; 60').

18. Work spindle according to Claim 17, **characterised in that** the first piston rod (56; 56') runs coaxially to the second piston rod (66; 66') constructed in the form of a tube.

19. Work spindle according to one of Claims 13 to 18, **characterised in that** the spindle guard tube (10) supports the second cylinder housing (62;62') of the second piston (60; 60').

20. Work spindle according to Claim 19, **characterised in that** the spindle guard tube (10) supports the second cylinder housing (62; 62') of the second piston (60; 60') at an end (32) opposite the clamping arrangement (20).

21. Work spindle according to one of Claims 17 to 20, **characterised in that** in the first working mode, the second piston rod (66; 66') is fixable relative to the spindle guard tube (10) by means of the switchover element (100).

22. Work spindle according to one of Claims 17 to 21, **characterised in that** in the second working mode, the first piston rod (56; 56') is fixable relative to the second piston rod (66; 66') by means of the switchover element (100).

23. Work spindle according to one of Claims 21 or 22, **characterised in that** the switchover element (100) is arranged on the second piston rod (66; 66') and is movable into various switchover positions fixed relative to the second piston rod (66).

24. Work spindle according to Claim 23, **characterised in that**, in a first switchover position, the switchover element (100) abuts against a shoulder (108) fixedly arranged in relation to the spindle guard tube (10).

25. Work spindle according to Claim 23 or 24, **characterised in that** in a second switchover position, the switchover element (100) abuts against a shoulder (112) fixedly connected to the first piston rod (56; 56').

## Revendications

1. Broche de travail pour une machine-outil, comprenant un tube de broche (10), qui est monté de manière à pouvoir tourner dans des paliers de broche et peut être entraîné par un moteur, un dispositif de serrage (20) qui est disposé sur une extrémité du tube de broche, un générateur de force de serrage (30) qui est disposé sur le tube de broche et actionne le dispositif de serrage et qui comporte au moins une première chambre de cylindre (54), qui est entourée par un premier boîtier de cylindre (52) et par un premier piston (50) et peut être chargée, pour la production d'une force de serrage dans le dispositif de serrage, par un fluide placé sous pression, et comportant une liaison entre le générateur de force de serrage (30) et le dispositif de serrage (20), **caractérisée en ce que** le générateur de force de serrage (30 ; 30') possède une seconde chambre de cylindre (75) entourée par un second boîtier de cylindre (62 ; 62') et un second piston (60 ; 60'), que pour l'actionnement du dispositif de serrage (20), en permanence les deux chambres de cylindre (54, 64 ; 54', 64') sont chargées par le fluide sous pression et que le générateur de force de serrage (30 ; 30') peut être commuté, pour la production de différentes forces de serrage, depuis un premier mode de fonctionnement, dans lequel le premier piston (50 ; 50') actionne le dispositif de serrage (20), dans un second mode de fonctionnement, dans lequel le second piston (60 ; 60') actionne le dispositif de serrage (20).

2. Broche de travail selon la revendicatlon 1, **caractérisée en ce que** dans le premier mode de travail, l'un des pistons (50') est actif et que dans le second mode de travail, les deux pistons (50' ; 60') sont actifs.

3. Broche de travail selon la revendication 1, **caractérisée en ce que** dans le premier mode de travail, seul le premier piston (50) est actif et, dans le second mode de travail, seul le second piston (60) est actif.

4. Broche de travail selon la revendication 2 ou 3, **caractérisée en ce que** dans le premier mode de travail, le second piston (60 ; 60') peut être fixé par rapport au second boîtier de cylindre (62 ; 62').

5. Broche de travail selon la revendication 3 ou 4, **caractérisée en ce que** dans le second mode de travail, le premier piston (50) peut être fixé par rapport au premier boîtier de cylindre (52).

6. Broche de travail selon l'une des revendications précédentes, **caractérisée en ce qu'**une surface d'un piston (60 ; 60') est plus grande que la surface de l'autre piston (50 ; 50').

7. Broche de travail selon l'une des revendications 2 à 6, **caractérisée en ce qu'**une commutation est réalisée entre les premier et second modes de travail, au moyen d'une modification de la fixation des pistons (50, 60 ; 50', 60').

8. Broche de travail selon la revendication 7, **caractérisée en ce que** pour réaliser la commutation entre les premier et second modes de travail, il est prévu un élément de commutation (100).

9. Broche de travail selon la revendication 8, **caractérisée en ce que** l'élément de commutation (100) peut être actionné manuellement.

10. Broche de travail selon la revendication 8 ou 9, **caractérisée en ce que** l'élément de commutation (100) est disposé d'une manière associée au dispositif de serrage (20).

11. Broche de travail selon la revendication 10, **caractérisée en ce que** l'élément de commutation (100) est disposé de manière à être accessible dans le tube de broche (10) à partir de côtés du dispositif de serrage (20).

12. Broche de travail selon l'une des revendicadons 7 à 11, **caractérisée en ce que** l'élément de commutation (100) est actif au niveau de la liaison (56; 66) entre le générateur de force de serrage (30) et le dispositif de serrage (20).

13. Broche de travail selon l'une des revendications précédentes, **caractérisée en ce que** le premier boîtier de cylindre (52) du premier piston (50) est formé par le second piston (60).

14. Broche de travail selon la revendication 13, **caractérisée en ce que** la première chambre de cylindre (54) du premier piston (50) est reliée par l'intermédiaire d'un canal (94) dans le second piston (60) à la seconde chambre de cylindre (64).

15. Broche de travail selon l'une des revendications précédentes, **caractérisée en ce que** chaque piston (50, 60 ; 50', 60') comporte une chambre de cylindre amère (82, 92 ; 82', 92') et que les chambres de cylindre arrlère (82, 92 ; 82', 92') sont reliées entre elles de façon permanente.

16. Broche de travail selon la revendication 15, **caractérisée en ce que** les chambres de cylindre arrière (82 ; 92) se prolongent l'une l'autre.

17. Broche de travail selon l'une des revendications précédentes, **caractérisée en ce que** la liaison entre le générateur de force de serrage (30 ; 30') et le dispositif de serrage (20) comporte une première tige de piston (56 ; 56') du premier piston (50, 50') et une seconde tige de piston (66 ; 66') du second piston (60 ; 60').

18. Broche de travail selon la revendication 17, **caractérisé en ce que** la première tige de piston (56 ; 56') s'étend coaxialement à la seconde tige de piston (66 ; 66') agencée sous la forme d'un tube.

19. Broche de travail selon l'une des revendications 13 à 18, **caractérisée en ce que** le tube de broche (10) porte le second boîtier de cylindre (62 ; 62') du second piston (60 ; 60').

20. Broche de travail selon la revendication 19, **caractérisée en ce que** le tube de broche (10) porte un second boîtier de cylindre (62 ; 62') du second piston (60 ; 60') sur une extrémité située à l'opposé du dispositif de serrage (20).

21. Broche de travail selon l'une des revendications 17 à 20, **caractérisée en ce que** dans le premier mode de travail, la seconde tige de piston (66 ; 66') peut être fixée par rapport au tube de broche (10) au moyen de l'élément de commutation (100).

22. Broche de travail selon l'une des revendications 17 à 21, **caractérisée en ce que** dans le second mode de travail, la première tige de piston (56 ; 56') peut être fixée au moyen de l'élément de commutation (100) par rapport à la seconde tige de piston (66 ; 66').

23. Broche de travail selon la revendication 21 ou 22, **caractérisée en ce que** l'élément de commutation (100) est disposé sur la seconde tige de piston (66 ; 66') et peut être amené dans différentes positions de commutation qui sont fixées par rapport à la seconde tige de piston (66).

24. Broche de travail selon la revendication 23, **caractérisée en ce que** l'élément de commutation (100) s'applique dans une position de commutation sur un épaulement (108) monté fixe par rapport au tube de broche (10).

25. Broche de travail selon la revendication 23 ou 24, **caractérisée en ce que** dans une seconde position de commutation, l'élément de commutation (100) s'applique contre un épaulement (112) qui est relié de façon fixe à la première tige de piston (56 ; 56').
